# EUROPÄISCHE PATENTANMELDUNG

(11) **EP 3 124 448 A1**
(43) Veröffentlichungstag der Anmeldung: **01.02.2017**
(21) Anmeldenummer: 16178331.1
(22) Anmeldetag: 07.07.2016
(51) Int. Cl.: C03C 8/16, C03B 19/06, B33Y 10/00, C03C 3/091, C03C 3/105

(54) **VERFAHREN ZUR HERSTELLUNG VON ROHLINGEN FÜR SINTERGLASKÖRPER FÜR GLASDURCHFÜHRUNGEN**

(30) Priorität: 28.07.2015 DE 102015112299
(71) Anmelder: IL Metronic Sensortechnik GmbH, 98693 Ilmenau-Unterpörlitz (DE)
(72) Erfinder: HUMMEL, Wolf-Joachim, Dr., 98693 Ilmenau (DE); NICOLAI, Katja, 98693 Ilmenau (DE)
(74) Vertreter: Liedtke, Klaus

(57) **Zusammenfassung**

Die Erfindung betrifft ein Verfahren zur Herstellung von Rohlingen für Sinterglaskörper für Glasdurchführungen, wobei mit einem 3D-Druck-Verfahren eine Reihe von Schichten übereinander angeordnet werden, wobei in einem ersten Schritt eine erste Schicht aus einem Glaspulver auf einer Oberfläche ausgebreitet wird, ein computergesteuerter Strahl einer Druckflüssigkeit auf ausgewählte Flächen der ersten Schicht in einem von dem Computer vorgeschriebenen Muster gelenkt wird, in einem zweiten Schritt eine weitere Schicht aus dem Glaspulver über der ersten Schicht ausgebreitet wird und darauf ein computergesteuerter Strahl von Druckflüssigkeit auf ausgewählte Flächen der zweiten Schicht in einem von dem Computer vorgeschriebenen Muster gelenkt wird, die beiden Schritte wiederholt werden, bis der Rohling gebildet ist, wobei
- das Glaspulver Bestandteile aus SiO₂, Na₂O, K₂O, CaO, MgO,B₂O₃, BaO, Al₂O₃, PbO, Li₂O und SrO sowie ein festes Bindemittel aus Dextrin enthält,
- das Glaspulver eine Korngrößenverteilung mit einer maximalen Korngröße von 165µm aufweist und
- die Druckflüssigkeit aus eine wässrigen Lösung eines Polymers 2- Pyrrolidon besteht.

## Beschreibung

Die Erfindung betrifft ein Verfahren zur Herstellung von Rohlingen für Sinterglaskörper für Glasdurchführungen, bei dem mit einem 3D-Druck-Verfahren eine Reihe von Schichten übereinander angeordnet werden, wobei in einem ersten Schritt eine erste Schicht aus einem Glaspulver auf einer Oberfläche ausgebreitet wird, ein computergesteuerter Strahl einer Druckflüssigkeit auf ausgewählte Flächen der ersten Schicht in einem von dem Computer vorgeschriebenen Muster gelenkt wird, in einem zweiten Schritt eine weitere Schicht aus dem Glaspulver über der ersten Schicht ausgebreitet wird und darauf ein computergesteuerter Strahl von Druckflüssigkeit auf ausgewählte Flächen der zweiten Schicht in einem von dem Computer vorgeschriebenen Muster gelenkt wird und die beiden Schritte wiederholt werden, bis der Rohling gebildet ist.

Unter Rohlingen für Sinterglaskörper für Glasdurchführungen werden Körper verstanden, die durch Sintern einen für Einglasungen benötigten Glaskörper ergeben. Derartige Glaskörper werden insbesondere für Glasdurchführungen benötigt, bei denen metallische Leiter mittels Glaseinschmelzungen oder Glaslot in einem metallischen Außenkörper befestigt werden. Dabei kann es erforderlich sein, exakte Glaskörperstrukturen mit mehr als 100 eingeglasten Innenleitern herzustellen.

Mit den bekannten Verfahren werden die Glaskörper durch ein Pressverfahren hergestellt, bei dem ein mit einem Bindemittel versetztes Glasgranulat mit speziell für diese Form hergestellten Werkzeugen zu einem Rohling für Sinterglaskörper gepresst wird. Die Herstellung derartiger Werkzeuge verursacht hohe Kosten und lange Entwicklungszeiten. Außerdem können nur bestimmte geometrische Formen erzeugt werden.

Zur speziellen und hochpräzisen Herstellung komplexer Bauteile finden 3D-Druckverfahren zunehmend Anwendung.

Aus US 5,204,055 A ist es bereits bekannt, 3D-Druckverfahren zur Herstellung von Werkstücken mit Pulver als Ausgangsmaterial zu erzeugen, wobei mehrere Schichten aufbauend übereinander geschichtet werden.

Ferner ist in DE 11 2005 002 040 T5 ein Verfahren zur Herstellung von Gegenständen aus Aluminium und Magnesium beschrieben. Damit werden Prototypen für Automobilteile gefertigt.

In WO 2014/067990 A1 ist ein Verfahren zur Herstellung eines keramischen Grünkörpers beschrieben, bei dem auf einer Unterlage eine Schicht gebildet wird, die ein keramisches, glaskeramisches oder Glaspulver enthält. Eine Verfestigungszusammensetzung mit einem Lösungsmittel oder Dispergiermittel wird auf einen Teil der Schicht appliziert. Diese Schritte werden mindestens einmal wiederholt, das Lösungsmittel oder Dispergiermittel unter Bildung eines Grünkörpers teilweise oder vollständig entfernt. Das nicht gebundene keramische Pulver wird ebenfalls entfernt, wobei der Grünkörper freigelegt wird.

Glasdurchführungen müssen spezielle Anforderungen erfüllen, insbesondere eine geringe Porosität, aufweisen, die mit den bekannten Verfahren nicht erreicht werden.

Der Erfindung liegt die Aufgabe zu Grunde, ein Verfahren zur Herstellung von Rohlingen für Glasdurchführungen zu schaffen, welches sich vom bisherigen Verfahren hinsichtlich geringerer Kosten und der Erweiterung der Geometrien unterscheidet.

Die Aufgabe wird erfindungsgemäß durch ein Verfahren mit den im Anspruch 1 angegebenen Merkmalen gelöst.

Vorteilhafte Ausgestaltungen der Erfindung sind Gegenstand der Unteransprüche.

Die Rohlinge für Sinterglaskörper für Glasdurchführungen werden mit einem 3D-Pulverbett-Druck-Verfahren erzeugt, indem eine Reihe von Schichten übereinander angeordnet wird. Zuerst erfolgt das Aufbringen einer Schicht aus Glaspulver, welche mit einer Druckflüssigkeit fixiert wird. Anschließend wird die nächste Schicht aufgebracht und fixiert, solange bis der Rohling fertig ist.

Das Glaspulver weist Bestandteile aus SiO₂, Na₂O, K₂O, CaO, MgO, B₂O₃, BaO, Al₂O₃, PbO, Li₂O und SrO auf und enthält ein festes Bindemittel aus Dextrin. Das Glaspulver weist eine Korngrößenverteilung mit einer maximalen Korngröße von 165 µm auf. Die Druckflüssigkeit besteht aus einer wässrigen Lösung eines Polymers 2- Pyrrolidon.

Das für die Herstellung der Rohlinge verwendete Bindersystem besteht aus zwei Komponenten, einer Feststoffkomponente und einer Flüssigkomponente. Die Feststoffkomponente wird durch in das Glaspulver eingebrachtes Dextrin gebildet. Die Flüssigkomponente befindet sich in der Druckflüssigkeit in Form einer wässrigen Lösung des Polymers 2-Pyrrolidon (2-Py). Zur Benetzung eines Volumenelements (Voxel) mit den Abmessungen 250 µm x 250 µm x 250 µm ist bei Normaldruck (1,013 bar) eine 2Py-Menge zwischen 6 - 10 µg erforderlich, die durch den Druckkopf sichergestellt wird.

Für eine optimale Packungsdichte des Glaspulvers und eine geringe Porosität des für die Glaseinschmelzung verwendeten Sinterglaskörpers ist eine spezielle Korngrößenverteilung der Glaspulver erforderlich.

Eine vorteilhafte Ausgestaltung des Verfahrens entsteht dadurch, dass die Bestandteile des Glaspulvers folgende Zusammensetzung in Masse-% aufweisen:
SiO₂: 60 bis 70, vorzugsweise 62 bis 70, insbesondere 64,2
Na₂O: 6 bis 9, vorzugsweise 7 bis 7,5, insbesondere 7,18
K₂O: 5,5 bis 7,5, vorzugsweise 6 bis 6,5, insbesondere 6,35
CaO: 0,1 bis 0,8, vorzugsweise 0,2 bis 0,4, insbesondere 0,36
MgO: 0,1 bis 0,6, vorzugsweise 0,1 bis 0,2, insbesondere 0,14
B₂O₃: 1,5 bis 3,5, vorzugsweise 2,5 bis 3, insbesondere 2,84
BaO: 10 bis 20, vorzugsweise 13 bis 14, insbesondere 13,8
Al₂O₃: 1,5 bis 3,5, vorzugsweise 2 bis 3, insbesondere 2,36
PbO: 0,005 bis 0,02, vorzugsweise 0,005 bis 0,01, insbesondere 0,01
Li₂O: 2,0 bis 3,5, vorzugsweise 7 bis 7,5, insbesondere 2,57
SrO: 0,1 bis 0,6, vorzugsweise 0,1 bis 0,2, insbesondere 0,13,
wobei die Summe der Bestandteile 100 % ergibt,
und die Korngrößenverteilung des Glaspulvers eine Ausgangssiebung aufweist mit den Korngrößenanteilen
0,5 bis 1,5 %, vorzugsweise 1 % <88 µm
0,1 bis 1,0 %, vorzugsweise 0,5 % <78 µm
4,0 bis 8,0 % vorzugsweise 6 % <30 µm
12 bis 20 %, vorzugsweise 18 % <20 µm
35 bis 70 %, vorzugsweise 64 % <5 µm
wobei die Summe der Bestandteile 100 % ergibt.

So hergestellte Rohlinge sind insbesondere zur Weiterverarbeitung bei Druckglasdurchführungen geeignet. Bei diesen Ausführungen ist der Ausdehnungskoeffizient des Glases geringer als der des metallischen Außenringes.

Eine weitere vorteilhafte Ausgestaltung des Verfahrens sieht vor, dass die Bestandteile des Glaspulvers folgende Zusammensetzung in Masse-% aufweisen:
SiO₂: 55 bis 75, vorzugsweise 60 bis 70, insbesondere 65
Na₂O und/oder K₂O: 1,5 bis 4, vorzugsweise 2 bis 3
Al₂O₃: 6 bis 10, vorzugsweise 7 bis 9, insbesondere 8
CaO und/oder MgO und/oder BaO: 1 bis 5, vorzugsweise 2 bis 4, insbesondere 3
B₂O₃: 15 bis 24, vorzugsweise 16 bis 20, insbesondere 18 wobei die Summe der Bestandteile 100 % ergibt,
und die Korngrößenverteilung des Glaspulvers eine Ausgangssiebung aufweist mit den Korngrößenanteilen
0,5 bis 1,5 %, vorzugsweisel % <149 µm
1,0 bis 3,0 %, vorzugsweise 2 % < 78 µm
6,0 bis 10,0 %, vorzugsweise 8 % < 30 µm
15 bis 25 %, vorzugsweise 21 % <20 µm
50 bis 70 %, vorzugsweise 61 % <5 µm
wobei die Summe der Bestandteile 100 % ergibt.

Derartige Rohlinge sind besonders geeignet zur Weiterverarbeitung in Bauteilen aus Materialien mit geringem Ausdehnungskoeffizienten, beispielsweise aus Kovar, einer Legierung aus 54 % Eisen, 29 % Nickel, 17 % Cobalt.

Eine weitere vorteilhafte Ausgestaltung des Verfahrens besteht darin, dass die Bestandteile des Glaspulvers folgende Zusammensetzung in Masse-% aufweisen:
SiO₂: 60 bis 90, vorzugsweise 70 bis 80,
Na₂O und/oder K₂O: 2 bis 10, vorzugsweise 4 bis 8,
Al₂O₃: 1 bis 10, vorzugsweise 2 bis 7,
CaO und/oder MgO und/oder BaO: 0 bis 10, vorzugsweise 0 bis 5,
B₂O₃: 5 bis 20, vorzugsweise 7 bis 13,
wobei die Summe der Bestandteile 100 % ergibt, und die Korngrößenverteilung des Glaspulvers eine Ausgangssiebung aufweist mit den Korngrößenanteilen
0,1 bis 0,8 %, vorzugsweise 0,5% <165 µm
1,5 bis 3,0 %, vorzugsweise 2% <78 µm
30 bis 40 %, vorzugsweise 36% <20 µm
25 bis 40 %, vorzugsweise 35% <5 µm
wobei die Summe der Bestandteile 100 % ergibt.

Bei einer weiteren vorteilhaften Ausführung des Verfahrens ist vorgesehen, dass der Rohling nach dem Drucken einem stufenweisen Entbinderprozess ausgesetzt und anschließend gesintert wird. Dieser kombinierte Prozess setzt sich aus dem stufenweisen Binderausbrennen und dem Sintern des Glases zusammen. Die Temperaturstufen werden anhand der Thermogravimetrie (TG)-Kurven und der physikalischen Eigenschaften der Gläser wie Transformationspunkt, obere Kühltemperatur und Erweichungspunkt ermittelt.

Die Haltepunkte und -stufen (vorteilhaft sind sechs Haltestufen) des Entbinderprozesses sind den komplexen Vorgängen der Binderzersetzung geschuldet. Die organischen Zusätze müssen vor dem eigentlichen Sinterprozess möglichst gleichmäßig und vollständig aus dem Rohling herausgetrieben werden, weil Kohlenstoffrückstände beim darauffolgenden Einschmelzprozess Risse und durchgehende Poren bzw. das sogenannte "Schaumglas" hervorrufen können. Die Temperaturen für den Entbinderprozess liegen zwischen ca. 100 - 400 °C.

Die Erfindung wird im Folgenden anhand eines Ausführungsbeispiels näher erläutert.

Zur additiven Fertigung eines Sinterglaskörpers mit 40 Tunneln (nichtbedruckte Gebiete) werden die Rohlinge mit einem 3D-Drucker unter Verwendung einer speziellen Steuerungssoftware hergestellt. Die zugrunde liegenden 3D-Geometriedaten werden mittels CAD-Software erzeugt.

Das Glaspulver wird in den Vorratsbehälter des Druckers eingefüllt und leicht verdichtet. Nach Beendigung des Druckvorganges wird eine Schale mit Silica-Perlen in den Druckraum gestellt um die Trocknung der Rohlinge zu beschleunigen, welche für etwa 48 h im Pulverbett belassen werden. Nach der Entnahme werden sie von überschüssigem Pulver befreit und noch ca. 48 h in der Reinigungsstation belassen. Die Nachbearbeitung erfordert insbesondere bei den Tunneln methodisches Vorgehen durch Ausblasen mit Pressluft und gegebenenfalls leichtes An- oder Durchbohren mit speziellem Handbohren. Dieses Vorgehen ist bedingt durch die Kapillarwirkung des Bindersystems, welches sich in geringem Maß auf die nichtbedruckten Gebiete ausbreitet.

Anschließend werden der Entbinder- und der Sinterprozess durchgeführt. Dabei werden der Entbinderprozess bei Temperaturen von 100 - 400 °C und der Sinterprozess bei einer Maximaltemperatur von 700 °C, vorzugsweise bei maximal 670 °C, durchgeführt.

Das Diagramm erläutert das Entbinder- und Sinterregim für drei verschiedene Glaspulver GP1, GP2 und GP3.

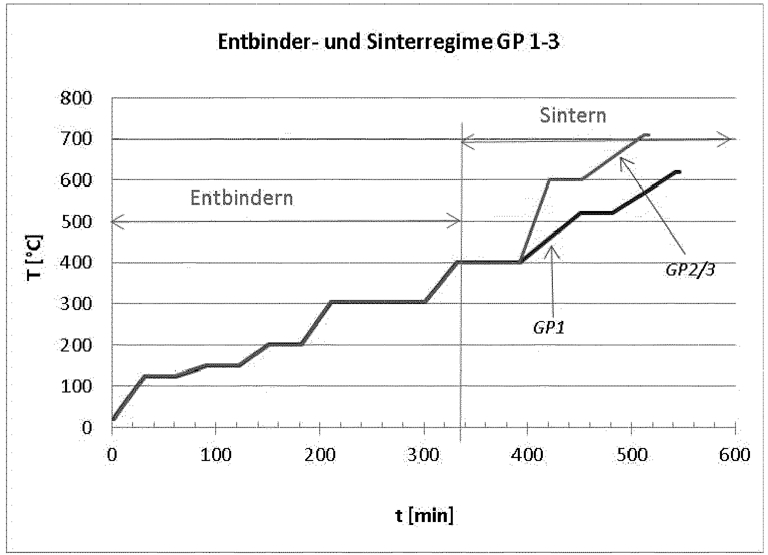

Danach kann die Montage der Glasdurchführung mit einem Drehteil und mit Innenleitern erfolgen.

Mit so hergestellten Glasdurchführungen konnten folgende Parameter erreicht werden:
- Vakuumdichtheit: 10⁻⁹ mbar * 1 / s
- Isolationswiderstand: <10¹¹ Ω bei 1000 V
- Druckprüfung: Beständigkeit bis 400 bar.

## Patentansprüche

1. Verfahren zur Herstellung von Rohlingen für Sinterglaskörper für Glasdurchführungen, bei dem mit einem 3D-Druck-Verfahren eine Reihe von Schichten übereinander angeordnet werden, wobei in einem ersten Schritt eine erste Schicht aus einem Glaspulver auf einer Oberfläche ausgebreitet wird, ein computergesteuerter Strahl einer Druckflüssigkeit auf ausgewählte Flächen der ersten Schicht in einem von dem Computer vorgeschriebenen Muster gelenkt wird, in einem zweiten Schritt eine weitere Schicht aus dem Glaspulver über der ersten Schicht ausgebreitet wird und darauf ein computergesteuerter Strahl von Druckflüssigkeit auf ausgewählte Flächen der zweiten Schicht in einem von dem Computer vorgeschriebenen Muster gelenkt wird und die beiden Schritte wiederholt werden, bis der Rohling gebildet ist, **dadurch gekennzeichnet, dass**
- das Glaspulver Bestandteile aus SiO₂, Na₂O, K₂O, CaO, MgO,B₂O₃, BaO, Al₂O₃, PbO, Li₂O und SrO sowie ein festes Bindemittel aus Dextrin enthält,
- das Glaspulver eine Korngrößenverteilung mit einer maximalen Korngröße von 165 µm aufweist und
- die Druckflüssigkeit aus eine wässrigen Lösung eines Polymers 2-Pyrrolidon besteht.

2. Verfahren nach Anspruch 1, **dadurch gekennzeichnet, dass** die Bestandteile des Glaspulvers folgende Zusammensetzung in Masse-% aufweisen:
SiO₂: 60 bis 70, vorzugsweise 62 bis 70, insbesondere 64,2
Na₂O: 6 bis 9, vorzugsweise 7 bis 7,5, insbesondere 7,18
K₂O: 5,5 bis 7,5, vorzugsweise 6 bis 6,5, insbesondere 6,35
CaO: 0,1 bis 0,8, vorzugsweise 0,2 bis 0,4, insbesondere 0,36
MgO: 0,1 bis 0,6, vorzugsweise 0,1 bis 0,2, insbesondere 0,14
B₂O₃: 1,5 bis 3,5, vorzugsweise 2,5 bis 3, insbesondere 2,84
BaO: 10 bis 20, vorzugsweise 13 bis 14, insbesondere 13,8
Al₂O₃: 1,5 bis 3,5, vorzugsweise 2 bis 3, insbesondere 2,36
PbO: 0,005 bis 0,02, vorzugsweise 0,005 bis 0,01, insbesondere 0,01
Li₂O: 2,0 bis 3,5, vorzugsweise 7 bis 7,5, insbesondere 2,57
SrO: 0,1 bis 0,6, vorzugsweise 0,1 bis 0,2, insbesondere 0,13,
wobei die Summe der Bestandteile 100 % ergibt, und die Korngrößenverteilung des Glaspulvers eine Ausgangssiebung aufweist mit den Korngrößenanteilen
0,5 bis 1,5 %, vorzugsweise 1 % <88 µm
0,1 bis 1,0 %, vorzugsweise 0,5 % <78 µm
4,0 bis 8,0 %, vorzugsweise 6 % <30 µm
12 bis 20 %, vorzugsweise 18 % <20 µm
35 bis 70 %, vorzugsweise 64 % <5 µm
wobei die Summe der Bestandteile 100 % ergibt.

3. Verfahren nach Anspruch 1, **dadurch gekennzeichnet, dass** die Bestandteile des Glaspulvers folgende Zusammensetzung in Masse-% aufweisen:
SiO₂: 55 bis 75, vorzugsweise 60 bis 70, insbesondere 65
Na₂O und/oder K₂O: 1,5 bis 4, vorzugsweise 2 bis 3
Al₂O₃: 6 bis 10, vorzugsweise 7 bis 9, insbesondere 8
CaO und/oder MgO und/oder BaO: 1 bis 5, vorzugsweise 2 bis 4, insbesondere 3
B₂O₃: 15 bis 24, vorzugsweise 16 bis 20, insbesondere 18
wobei die Summe der Bestandteile 100 % ergibt, und die Korngrößenverteilung des Glaspulvers eine Ausgangssiebung aufweist mit den Korngrößenanteilen
0,5 bis 1,5 %, vorzugsweise 1 % <149 µm
1,0 bis 3,0 %, vorzugsweise 2 % <78 µm
6,0 bis 10,0 %, vorzugsweise 8 % <30 µm
15 bis 25 %, vorzugsweise 21 % <20 µm
50 bis 70 %, vorzugsweise 61 % <5 µm
wobei die Summe der Bestandteile 100 % ergibt.

4. Verfahren nach Anspruch 1, **dadurch gekennzeichnet, dass** die Bestandteile des Glaspulvers folgende Zusammensetzung in Masse-% aufweisen:
SiO₂: 60 bis 90, vorzugsweise 70 bis 80,
Na₂O/K₂O: 2 bis 10, vorzugsweise 4 bis 8
Al₂O₃: 1 bis 10, vorzugsweise 2 bis 7,
CaO/MgO/BaO: 0 bis 10, vorzugsweise 0 bis 5,
B₂O₃: 5 bis 20, vorzugsweise 7 bis 13,
wobei die Summe der Bestandteile 100 % ergibt,
und die Korngrößenverteilung des Glaspulvers eine Ausgangssiebung aufweist mit den Korngrößenanteilen
0,1 bis 0,8 %, vorzugsweise 0,5 %<165 µm
1,5 bis 3,0 %, vorzugsweise 2 % <78 µm
30 bis 40 %, vorzugsweise 36 % <20 µm
25 bis 40 %, vorzugsweise 35 % <5 µm
wobei die Summe der Bestandteile 100 % ergibt.

5. Verfahren nach einem der vorhergehenden Ansprüche, **dadurch gekennzeichnet, dass** der Rohling nach dem Drucken einem stufenweisen Entbinderprozess bei Temperaturen von 100 bis 400 °C ausgesetzt wird und anschließend gesintert wird.

6. Verfahren nach Anspruch 5, **dadurch gekennzeichnet, dass** die Temperatur beim Sintern maximal 700 °C, vorzugsweise maximal 670 °C, beträgt.
